# EUROPEAN PATENT APPLICATION

(11) **EP 3 379 856 A1**
(43) Date of publication of application: **26.09.2018**
(21) Application number: 17182715.7
(22) Date of filing: 24.07.2017
(51) Int. Cl.: H04W 12/06, H04L 29/06

(54) **METHOD OF USER AUTHENTICATION INTO THIRD-PARTY APPLICATIONS, USING A MOBILE DEVICE**

(30) Priority: 23.03.2017 CZ 20170165
(71) Applicant: Software602 a.s., 14000 Praha 4 - Krc (CZ)
(72) Inventor: Kaucky, Richard, 14900 Praha 4 - Seberov (CZ)
(74) Representative: Hartvichova, Katerina

(57) **Abstract**

The present invention involves implementation of a high level of security of authentication using a mobile device by an electronic signature of identification data using a mobile application (SLAVE) operated on a mobile device and paired with a central application (MASTER), which provides interface for implementing this authentication method in third-party applications. The user authentication method includes the following steps: a step of initializing the authentication application on the user's mobile device and its registration at the central part of the authentication application, and a step of authentication when entering a digital service provider's application.

## Description

### Field of Art

The object of the invention is a method of user authentication using a smart mobile device with a high level of security using an electronic signature of identification data.

### Background Art

Authentication with a high level of security using an authentication certificate is currently performed using chip cards or USB tokens, which are physical devices which the user must carry with him all the time and which must be connected to the authentication application using a USB port. While the security level is high (the USB devices are usually equipped with cryptographic microprocessor technology), this solution has many disadvantages for the user, because the user must install system drivers for the devices and, most importantly, smart mobile devices are not equipped with a standard USB interface.

### Disclosure of the Invention

The object of the invention is a user-friendly user authentication method, using a smart mobile device such as smartphone, with a high level of security using an electronic signature of identification data. This method meets the requirements of a dynamic two-factor authentication method; using a knowledge factor (secret information, e.g. a PIN) and an ownership factor - ownership of a smart mobile device used solely under the control or as part of the ownership by the user. At the same time, no additional devices such as a chip card reader or USB token are required.

The authentication method is performed in a system that comprises:
- an authentication application (client part) on a mobile device of the digital service user (customer). This application provides a user interface for the customer when authenticating to digital services, and at the same time provides a communication interface for communicating with a client part of a digital service provider's application relating to authentication;
- a central part of the authentication application, which can be located in a cloud. This application part provides an integration and communication interface for the authentication application on the mobile device and for a central part of the digital service provider's application;
- a central part of the digital service provider's application, which communicates with the central part of the authentication application;
- a client part of the digital service provider's application, which provides a user interface for users of the digital service.

The authentication application on the user's mobile device typically takes the form of a mobile application.

The client part of the digital service provider's application typically takes the form of a web application for a web browser or a mobile application e.g. for a smartphone or tablet.

The digital service provider's application may be for example internet banking application, internet self-service application of a mobile operator or any other application where it is suitable or necessary to require user authentication. The application may be stored or run e.g. on a computer, laptop, tablet, mobile phone or on a specialized device, e.g. a cash machine.

The authentication method according to the invention contains a step of initializing the authentication application on the user's mobile device and its registration at the central part of the authentication application, and a step of authentication on entry into the digital service provider's application. The initialization and registration step is usually only performed once before or during the first use of the authentication application. The authentication step on entry into the digital service provider's application is performed as often as necessary, usually repeatedly.

The step of initializing the authentication application on the user's mobile device and its registration at the central part of the authentication application is performed in the following manner: after installing the client authentication application (SLAVE) on the user's mobile device, an encrypted storage (ES/S) with a secret key (KEY 1, private key) and public key (KEY 2, public key) is created during installation; a mobile telephone number of the user's mobile device (CN), on which the client authentication application is installed, is entered in the user interface of the central part of the authentication application (MASTER); the central part of the authentication application stores the mobile telephone number in its encrypted database and sends to this mobile telephone number a text message with a confirmation code (CODE), e.g. an alphanumerical or numerical one; this confirmation code is then entered into the authentication application on the mobile device, said mobile device sends the confirmation code to the central part of the authentication application along with the public key and a request for issuing a certificate (CSR - Certificate Signing Request); the central part of the authentication application verifies the correctness of the entered confirmation code, generates the certificate (CERT) with the received public key and signs it; stores the certificate and the mobile telephone number in its encrypted database and forwards them to the client authentication application; the client authentication application on the mobile device then stores the mobile telephone number and the signed certificate with the public key in its encrypted storage and then prompts the user to select and enter a secret information (e.g. a PIN) to the stored secret key in its encrypted storage and subsequently saves a digital fingerprint of the secret information (HASH) in said encrypted storage (the secret information protects the secret key; the central part of the authentication application registers the active client authentication application in its encrypted database.

The step of entering the mobile telephone number at the user interface of the central part of the authentication application can be performed as follows: after running the authentication application on the mobile device and entering the registration request, the user interface of the central part is run on the client authentication application; this user interface can be for example a registration web page of the central part of the authentication application.

The step of entering the confirmation code may be performed manually by the user on the mobile device.

The digital fingerprint of the secret information can be acquired by standard methods, taking a random string in the application (the authentication or the central one) and adding the secret information and using a one-way function to calculate a hash, which the application then stores and uses to compare every time the secret information is entered (the calculation always leads to the same hash when the same string and the same secret information is entered).

The authentication step when entering the digital service provider's application is performed after entering a user's request to enter the digital service provider's application. This request is typically entered in the user interface of the client part of the digital service provider's application, which has the form of e.g. a web page or a page in a mobile application. If the user is registered in several roles, for example as a natural person and at the same time as a natural person representing a legal person, the user also selects the role to use in the application. The client part of the digital service provider's application connects to the central part of the digital service provider's application, which passes to the client part of the digital service provider's application the identification data of the authentication transaction (IDT, e.g. a transaction number as a numerical or alphanumerical string); the central part of the digital service provider's application then initializes at the central part of the authentication application a request for user authentication by submitting the transaction identification data and the identification data of the digital service provider's application (IDSP, e.g. the provider's identification number). The client part of the digital service provider's application connects to the client part of the authentication application on the user's mobile device and passes to said device the identification data of the transaction. The client part of the authentication application on the mobile device requests from the central part of the authentication application a signature checksum (IDS) and signs the IDT with IDS using the secret key after the secret information is entered by the user, the central part of the authentication application verifies the match of the signature checksum and the integrity of the signed data (IDT/S) using the stored public key in its encrypted database and confirms the authentication result (YES/NO) to the client part of the authentication application; the central part of the digital service provider's application receives back from the central part of the authentication application the identification data of the transaction with the user's mobile telephone number and after the transfer is confirmed, the central part of the authentication application stores the authentication result in an encrypted database (EDB/M); the central part of the digital service provider's application identifies the user by the mobile telephone number and grants the user access to the corresponding digital services available based on his role, using the client part of the digital service provider's application.

If the procedure includes verification of entered or transferred data, then the procedure continues if the verification result is positive, and in the case of a negative verification result the procedure is suspended, stopped or ended.

Transfer of identification data from the client part of the digital service provider's application to the authentication application on the mobile device can be carried out for example by displaying a QR code for reading by the mobile device with the authentication application.

It is preferred that any receipt of data is confirmed by the receiving party during any data transfer.

The encrypted database at the central part of the authentication application contains identification data of digital service providers, issued certificates with public keys, mobile telephone numbers and identification data of transactions with authentication results.

The encrypted storage of the client part of the authentication application on the user's mobile device contains the secret key, the issued certificate with a public key, the user's mobile telephone number and the digital fingerprint of the secret information for accessing the secret key.

The advantage of the method is the fact that checking the ownership of the user's mobile telephone number, which is used for their identification in the central part of the digital service provider's application, is done by an independent channel using a confirmation code in a text message sent to the mobile telephone number supplied. A further advantage is the fact that the result of authentication with a high level of security is ensured by an integrity check of the signed transaction identification data using a public key whose identifier is linked to the user's mobile telephone number.

### Brief description of drawings

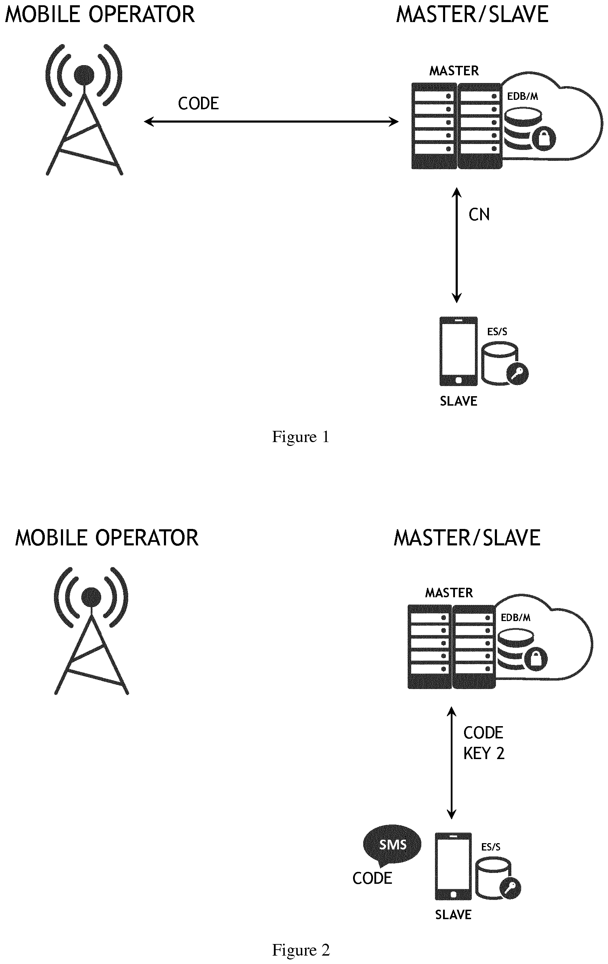

Figure 1 schematically represents identification of mobile telephone number ownership during the registration process.
Figure 2 schematically represents sending a text message to SLAVE with a request for issuing a certificate.

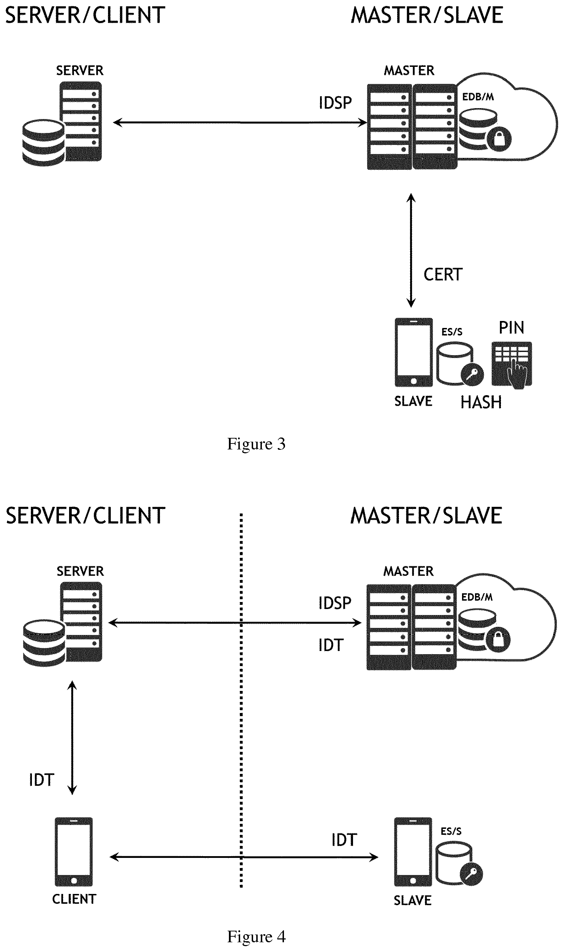

Figure 3 schematically represents registration of SERVER to MASTER and completion of SLAVE registration.
Figure 4 schematically represents the process of transferring identification data from CLIENT to SLAVE.

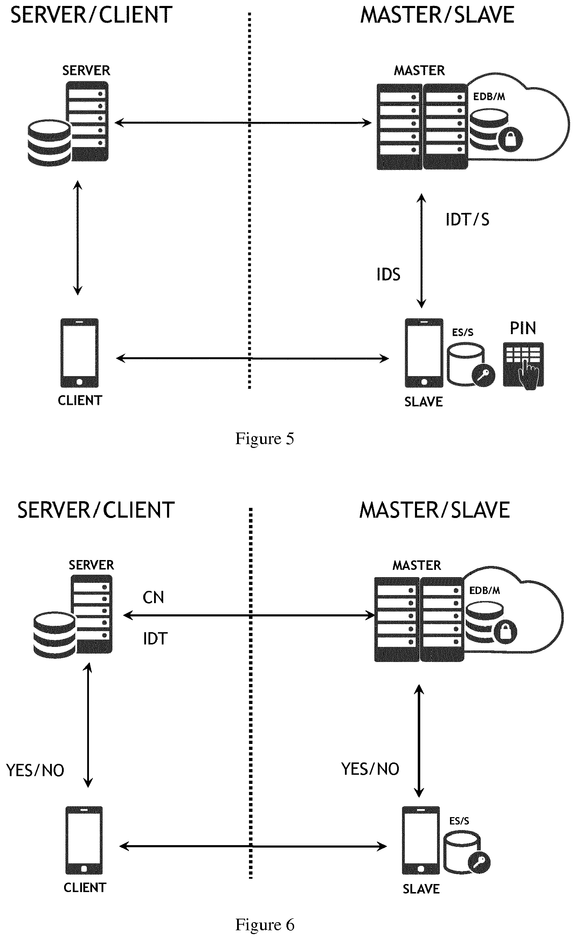

Figure 5 schematically represents the process of authorizing identification data on SLAVE.
Figure 6 schematically represents the process of transferring authentication data to SERVER and CLIENT.

### Abbreviations used in the text and figures:

CN - user's mobile telephone number stored at MASTER in an encrypted database EDB/M CODE - confirmation code generated by MASTER sent in a text message to the user's mobile telephone number
KEY 1 - secret key used to electronically sign the SLAVE identification data
KEY 2 - public key used to check the signed identification data at MASTER for integrity
CERT - certificate with KEY 2 issued and signed by MASTER, stored in an encrypted database EDB/M
PIN - secret information known to the user
HASH - digital fingerprint calculated from the PIN stored in an encrypted storage ES/S
IDSP - identification data of the digital service provider stored at MASTER
IDT - identification data of the authentication transaction issued by SERVER
IDS - signature checksum issued by MASTER
IDT/S - identification data with a signature checksum signed by SLAVE

### Examples of carrying out the Invention

### Example 1: Example of carrying out the authentication according to the invention

### Terms used for the individual parts of the system:

MASTER - central part of the authentication application located in the cloud, controls the SLAVE, provides integration interface for the SERVER for communication
SLAVE - authentication application on the mobile phone, provides user interface for the client when authenticating to digital services, provides interface for calls from the CLIENT, in terms of technology it is a mobile application on a smartphone
SERVER - central part of a third-party digital service provider's application, controls the CLIENT and communicates with the MASTER
CLIENT - client part of a third-party digital service provider's application, provides user interface for the customer of digital services, in terms of technology it is a web application in a web browser or a mobile application on a smartphone (by way of illustration: internet banking - it is available as an application in a web browser or as a mobile application)

The SLAVE initialization step by the user of digital services with registration to MASTER includes the following operations:
a. Installation of the client part of the authentication application on the mobile phone (SLAVE);
b. Request for registration at SLAVE redirects to the registration website of the central part of the authentication application located in cloud (MASTER);
c. The user at the MASTER registration website fills in the mandatory mobile telephone number CN of the smartphone with the SLAVE installed;
d. MASTER stores the mobile telephone number in an encrypted database EDB/M, sends a six-digit confirmation sequence CODE as a text message to the registered mobile telephone number;
e. User submits to SLAVE the number sequence received in the text message and SLAVE sends the CODE along with the public key KEY 2 and a certificate issuance request;
f. MASTER checks the confirmation number sequence, generates a certificate with a public key CERT, signs it and returns it with a confirmation that the submitted mobile telephone number is correct;
g. SLAVE, after the MASTER's confirmation, stores at the encrypted storage ES/S the mobile telephone number and signed certificate with the public key from MASTER;
h. SLAVE prompts the user to enter the secret information (PIN), calculates the digital fingerprint (HASH) to access the secret key KEY 1 and stores it at the ES/S;
i. SLAVE sends to MASTER a confirmation of receiving the certificate, MASTER assigns SLAVE as a registered application to the mobile telephone number along with the issued certificate and the public key in the encrypted database EDB/M;
The user authentication step when entering the digital service provider's application includes the following operations:
j. CLIENT sends requestto the SERVER to display the page of the provided digital services, after displaying said pages the SERVER requests authentication from CLIENT; if the user of digital services is in several roles, the user also selects his role (e.g. the role of a natural person or the role of a natural person representing a legal person);
k. SERVER passes to CLIENT the identification data of the authentication transaction IDT, at least a numerical or alphanumerical string of the transaction ID;
**l.** SERVER initializes at MASTER a request for authentication to the provided digital services by sending identification data of the digital service provider IDSP (typically the Provider's identification number) and identification data of the authentication transaction IDT;
m. CLIENT calls SLAVE and transfers the IDT with an authentication request;
n. SLAVE requests from MASTER a signature checksum IDS, the user enters at SLAVE the secret information (PIN), the PIN digital fingerprint (HASH) is compared with the digital fingerprint in ES/S and the SLAVE subsequently signs the IDT along with tge IDS by secret key KEY 1 from ES/S;
o. SLAVE transfers the signed data IDT/S to MASTER, which checks the integrity of the signed identification data using the public key KEY 2;
p. MASTER checks the correctness (verifies) of the signed identification data and returns to SLAVE the authentication result (YES/NO); connects the public key with the mobile telephone number and returns to SERVER the mobile telephone number CN and identification data of authentication transaction IDT;
q. SERVER confirms reception of data to MASTER, which stores the authentication result in the encrypted database EDB/M;
r. when the authentication result is positive, SERVER identifies the authenticated user by the mobile telephone number CN and, based on the role, assigns the user the available digital services at CLIENT.

### Example 2

This example shows the use of the invention to enter an authenticated application of a mobile operator's internet self-service (third-party application, digital service provider's application). The user installs on his smartphone a mobile authentication application SLAVE, which after installation has a generated encrypted storage with a secret and public key stored in it. After the installation, the user is prompted by the application to "Register the device", which redirects the user to the registration website of MASTER. The user enters the mobile telephone number, optionally an e-mail address for notifications, the MASTER sends a randomly generated sequence of numbers as a text message to the entered mobile telephone number (similarly to authorizing a credit card payment or a payment order in internet banking), SLAVE returns to MASTER the sequence of randomly generated numbers received in the text message together with a public key; after checking the sequence MASTER returns to SLAVE a signed certificate with a public key. SLAVE stores the certificate with the mobile telephone number in the encrypted storage and prompts the user to enter the PIN to the secret key and stores the digital fingerprint of the secret information in the encrypted storage. After the confirmation, the SLAVE is registered to MASTER and ready to provide authentication services for the mobile operator's internet self service.

The mobile operator has the user's mobile telephone number as one of the user's identification details and adds the authentication using a mobile phone to the other methods on its login site. Based on the device used to log in to the internet self service, the user is prompted to authenticate by the SLAVE application on the mobile phone; if the user accesses the internet self service e.g. from a laptop, the SLAVE scans the QR code displayed on the laptop and then the user enters the PIN to log in to the internet self service; if logging in using a mobile phone with the SLAVE installed, the user only enters the PIN.

With one SLAVE registered, the user can log in the same way to more digital service providers (third-party applications) who support this authentication method, without having to register again. Typically it is e.g. a user of internet banking, where payment transactions are authorized using a text message to a mobile phone number associated with the bank account number at the internet banking provider.

### Industrial applicability

The invention allows to use smartphones as means of electronic identification with a high level of security when authenticating to public administration applications, internet banking, mobile operators' self-service portals, insurance companies and operators in other network industries with large numbers of clients. The method of the invention can be used not only to secure entry to authenticated applications, but also to secure entry to authenticated areas.

The primary advantage of the invention is that login to third-party applications that provide digital services requiring authentication (SERVER/KLIENT) is implemented as a single personal factor, typically by entering a PIN (4-6 digits) similarly to authentication of a credit card (preferably with Touch ID or similar technology that supports biometry on a mobile device) on a security level comparable to that provided by USB tokens with cryptographic microprocessor technology while reducing the costs on a text message gateway (text message is only used for registration activation/deactivation of the client authentication application SLAVE to the central part of the authentication application MASTER) and simple use when compared to a regular two-factor authentication. Recommended system security provisions on the mobile device are: common active locking of the mobile device screen and active remote destruction of the device contents if the device is lost.

## Claims

1. A method of user authentication to the services of a digital service provider, comprising the following steps:
- the step of initializing the authentication application on the user's mobile device and of registration of said authentication application on the user's mobile device to the central part of the authentication application, comprising the following sub-steps: after installing the authentication application to the user's mobile device, a mobile telephone number belonging to the user's mobile device on which the authentication application is installed is entered through the user interface of the central part of the authentication application; the central part of the authentication application stores the mobile telephone number in its encrypted database and sends to this mobile telephone number a text message with a confirmation code; this confirmation code is subsequently entered in the authentication application on the mobile device, which transfers said confirmation code along with a public key to the central part of the authentication application and the authentication application verifies the entered confirmation code for correctness; the central part of the authentication application generates a certificate with a public key, signs it and transfers it to the authentication application on the mobile device, and stores the signed certificate and public key in its encrypted database; the authentication application on the mobile device prompts the user to select and enter a secret information, and stores a digital fingerprint of the secret information along with the signed certificate and mobile telephone number into an encrypted storage already containing the public and secret key and confirms receipt to the central application;
- and a step of authentication when entering an application of a digital service provider, comprising the following sub-steps: after receiving the user's request to enter the application of the digital service provider, the client part of the digital service provider's application connects to the central part of the digital service provider's application; whereas if the user has more than one role, the user selects a role in the client application and the client application sends the information about the role to the central part of the application; the central part of the digital service provider's application initializes at the central part of the authentication application a request for user authentication by sending identification data of the authentication transaction and identification data of the digital service provider's application, and at the same time transfers the identification data of the transaction to the client part of the digital service provider's application; the client part of the digital service provider's application connects to the authentication application on the user's mobile device and transfers the transaction identification data; the authentication application on the mobile device, after receiving the transaction identification data, prompts the central part of the authentication application to transfer a signature checksum and then prompts the user to enter the secret information and subsequently signs this transaction's identification data with the signature checksum using the secret key and transfers the signed data to the central part of the authentication application; the central part of the authentication application verifies the match of the signature checksum and integrity of the signed data using the public key linked in the encrypted database with the user's mobile telephone number and transfers the authentication result to the authentication application on the mobile device; the central part of the authentication application uses the public key to find the user's mobile telephone number in the encrypted database and transfers the user's mobile telephone number and the transaction identification data to the central part of the digital service provider's application and, after receiving the receipt confirmation, stores the authentication result in the encrypted database; the central part of the digital service provider's application uses the mobile telephone number to identify the user and, based on the role, allows the user to enter and/or use the available digital services through the client part of the digital service provider's application.

2. The method according to claim 1, wherein the step of entering the mobile telephone number at the user interface of the central part of the authentication application is performed so that after running the authentication application on the mobile device and entering the registration request, a user interface of the central part of the authentication application is run, and this user interface is preferably in the form of a registration web page of the central part of the authentication application.

3. The method according to any one of the preceding claims, wherein the transfer of data from the client part of the digital service provider's application to the client part of the authentication application on the mobile device is performed by means of displaying a QR code and reading it using the mobile device and transferring the data to the client authentication application.

4. The method according to any one of the preceding claims, wherein at any step comprising verification or checking of correctness of the entered or transferred data, if the verification result is positive, the procedure continues, and if the verification result is negative, the procedure is suspended, stopped or ended.

5. The method according to any one of the preceding claims, wherein any receipt of data is confirmed by the receiving party during any data transfer.
